# EUROPÄISCHE PATENTSCHRIFT

(11) **EP 0 842 062 B1**
(45) Veröffentlichungstag und Bekanntmachung des Hinweises auf die Patenterteilung: **21.04.1999**
(21) Anmeldenummer: 96923924.3
(22) Anmeldetag: 25.06.1996
(51) Int. Cl.: B60R 16/00

(54) **ELEKTROSCHALTER MIT IM BEREICH DES MANUELL BEDIENTEN BETÄTIGUNGSELEMENTS ANGEORDNETEN MIKROSCHALTERN**
ELECTRIC SWITCH WITH MICROSWITCHES FITTED IN THE REGION OF THE MANUALLY OPERATED ACTUATING COMPONENT
INTERRUPTEUR ELECTRIQUE A MICRO-INTERUPTEURS DISPOSES DANS LA REGION DE L'ELEMENT D'ACTIONNEMENT A COMMANDE MANUELLE

(30) Priorität: 04.08.1995 DE 19528641
(43) Veröffentlichungstag der Anmeldung: 20.05.1998
(73) Patentinhaber: ITT Automotive Europe GmbH, 60488 Frankfurt (DE)
(72) Erfinder: MOZER, Reiner, D-71665 Vaihingen (DE); KLEIN, Rudolf, D-74348 Lauffen (DE); NEUBAUER, Walter, D-74348 Lauffen (DE)
(74) Vertreter: Dreiss, Fuhlendorf, Steimle & Becker
(86) Internationale Anmeldenummer: EP9602771
(87) Internationale Veröffentlichungsnummer: WO9706034

(56) Entgegenhaltungen:
- DE-A- 2 835 256
- US-A- 3 934 101
- US-A- 4 640 997

## Beschreibung

Die Erfindung betrifft einen elektrischen Schalter mit einem Kontaktstücke tragenden Träger, wobei die Kontaktstücke im Bereich eines Betätigungselementes angeordnet sind, welches den Träger zumindest teilweise umschließt. Derartige Konstruktionen sind beispielsweise bei Lenkstockschaltern bekannt, bei denen innerhalb des Betätigungsgriffes selbst noch betätigbare Kontaktpaarungen angeordnet sind. Bei derartigen Schaltern kann beispielsweise der Griff zur Schaltbetätigung verdrehbar sein (siehe DE-AS 23 22 661) oder aber auch in seiner Längsrichtung verschiebbar sein (siehe beispielsweise DE-OS 25 31 696).

Den Schaltern gemeinsam ist, daß die Schalter innerhalb des Griffbereichs des Lenkstockschalters diskret aus einzelnen Bauelementen aufgebaut sind. Ein derartiger Aufbau kann nachteilig sein, wenn Einzelteile des Schalters ausgewechselt werden müssen, wenn bei einem derartigen Schalter nicht große Herstellungsserien erzielt werden oder wenn mit dem gleichen mechanischen Aufbau bei vergleichbarem Bewegungsablauf unterschiedliche Schaltfolgen erzielt werden sollen.

Die Erfindung geht daher aus von einem elektrischen Schalter der sich aus dem Oberbegriff des Anspruchs 1 ergebenden Gattung. Aufgabe der Erfindung ist es, einen Schalter anzugeben, welcher bei unverändertem Aufbau von Träger und Betätigungselement bei vergleichbarem Betätigungsablauf unterschiedliche Schaltfolgen durchzuführen gestattet. Außerdem sollen defekte Schalter leicht reparierbar sein. Der erfindungsgemäße Schalter soll es weiterhin zulassen, daß die in ihm enthaltenen Kontaktpaare durch unterschiedliche Betätigungsformen bedient werden können.

Die Aufgabe wird durch die sich aus dem kennzeichnenden Teil des Anspruchs 1 ergebende Merkmalskombination gelöst.

Die Erfindung besteht im Prinzip also darin, in dem Träger eine Aufnahme für Microschalter vorzusehen, die durch eine vorgeschriebene Bewegungsform des Betätigungselements in einer vorgesehenen Folge bedient werden können. Der Vorteil einer derartigen Maßnahme besteht im wesentlichen darin, daß die Microschalter vorgeprüft in den vorgefertigten Schalter eingesetzt werden können. Dabei ist es nicht notwendig, daß sämtliche Aufnahmeplätze für einen Mikroschalter tatsächlich belegt werden. Durch eine unterschiedliche Ausgestaltung der Form des Betätigungselements können weiterhin die in die Aufnahme eingesetzten Microschalter in abweichender Folge betätigt werden. Zu Reparaturzwecken muß der fehlerhaft arbeitende Microschalter einfach ausgewechselt werden. Dies ist dann besonders einfach, wenn eine leicht lösbare Anschlußverbindung, wie Schneid-Steckverbinder oder ähnliches gewählt wird, so daß die Anschlußleitungen leicht mit dem neu eingesetzten Microschalter verbunden werden können.

Dabei muß das Betätigungselement eine Kontur aufweisen, die durch die Bewegung des Betätigungselementes die Betätigungsstößel der Microschalter in der gewünschten Reihenfolge bedient.

Um auch hier eine besonders große Flexibilität zu erreichen und ein schnelles Nach- bzw. Umrüsten des Schalters zu ermöglichen, empfiehlt sich in Weiterbildung der Erfindung die Merkmalskombination nach Anspruch 2. Dabei wird in das Betätigungselement eine Schaltkulisse eingesetzt, deren Oberfläche gegenüber den Betätigungsstößeln der Microschalter derart geformt ist, daß sie diese in der gewünschten Weise auslösen. In Verbindung mit der Belegung der einzelnen Schalterplätze in der Aufnahmebucht ergibt sich hier eine breite Vielfalt von Schaltmöglichkeiten und Schaltfolgen, indem durch Auswechseln der Platte und/oder Umstecken der Microschalter ein neues Schaltverhalten des erfindungsgemäßen Schalters herbeigeführt wird.

Soweit das Betätigungselement den Träger in Form eines Schaltgriffes im wesentlichen zylinderförmig umgibt, empfiehlt sich in Weiterbildung der Erfindung besonders die Merkmalskombination nach Anspruch 3. Dabei kann die Schaltkulisse in das Betätigungselement selbst eingerastet werden. Sie kann aber auch entsprechend einer im Zusammenhang mit Anspruch 16 nachfolgend erläuterten Merkmalskombination durch einen Halter gefaßt werden, welcher gleichzeitig eine Blende für das Betätigungselement als auch Befestigung für den Schalter darstellen kann.

Eine besonders einfache Betätigung des Betätigungselements ergibt sich durch wahlweise oder gleichzeitige Anwendung der in Anspruch 4 aufgeführten Merkmale. Das bedeutet, daß die Schalter durch Verschieben der Betätigungselement in der Längsachse und/oder durch Verdrehen um deren Drehachse in der durch die Ausgestaltung der Schaltkulisse vorgeschriebenen Form ausgelöst werden. Es zeigt sich, daß hierdurch eine große Anzahl von Schaltmöglichkeiten zusätzlich programmierbar ist.

Weiter oben war schon erwähnt worden, daß in einer Aufnahmebucht des Trägers mehrere Microschalter in die vorgesehenen Plätze eingerastet werden können. Um nun durch eine Drehbewegung mehrere Schalter in der durch die Kulisse vorgegebenen Reihenfolge schalten zu können, empfiehlt sich in Weiterbildung der Erfindung die Merkmalskombination nach Anspruch 5. Hierdurch können durch einen begrenzten Drehweg gleichzeitig mehrere Schalter in der durch die Kulisse vorgegebenem Reihenfolge betätigt werden. Vorteilhaft bei dieser Anordnung ist es, daß sich ein relativ kurzer Schaltweg trotz der ggf. zweckmäßigen Anlaufschrägen ergibt. Außerdem können bei dieser Betätigungsbewegung vergleichsweise viele Schalter nebeneinander gepackt werden. Dabei empfiehlt sich in Weiterbildung der Erfindung, daß die einzelnen Microschalter nicht direkt über ihren in radialer Richtung beweglichen Betätigungsstößel, sondern indirekt über einen Kipphebel beaufschlagt werden, welcher an dem einen Ende des Kippschalters schwenkbar befestigt ist und welcher an dem anderen Ende auf dem Betätigungsstößel aufliegt. Dieser Betätigungshebel kann beispielsweise aus Blech gebildet sein, in den die Einlaufschräge eingeformt ist, so daß über diesen Hebel zusätzlich zu der Schaltkulisse der Schaltpunkt des Schalters festgelegt werden kann. Im übrigen kann durch den elastischen, aus Metall bestehenden Betätigungshebel die Schalttoleranz des Schalters beeinflußt werden. Zusätzlich kann durch die Wahl des Hebels die für den Schalter notwendige Betätigungskraft herabgesetzt und der Betätigungsweg für den Schalter vergrößert und damit die Tolerierung verbreitert werden.

Für den Fall, daß für das Betätigungselement (u.a.) eine Bewegung in dessen Längsachse zum Schalten eines oder mehrerer Microschalter vorgesehen ist, empfiehlt sich in Weiterbildung der Erfindung die Merkmalskombination nach Anspruch 6. Danach ist ein (gesondertes) Schaltstück vorgesehen, welches mittelbar oder unmittelbar mit dem Betätigungselement verbunden ist. Dieses Schaltstück hat vorzugsweise eine Anlaufschräge, mit der es auf den zugehörigen Betätigungsstößel des Microschalters aufläuft. Dabei kann der Microschalter sowohl längs zur Bewegungsrichtung als auch quer dazu angeordnet sein. Dabei läßt sich auch die Schaltkulisse mit dem Schaltstück kombinieren, so daß bei einer Drehbewegung die der Kulisse zugeordneten Schalter und bei einer Längsbewegung des Betätigungselements die dem Schaltstück zugeordneten Microschalter ausgelöst werden. Selbstverständlich ist es auch möglich, Schaltstück und Schaltkulisse miteinander zu kombinieren, so daß in Abhängigkeit von der Bewegungsrichtung des Betätigungselements unterschiedliche Schalter ausgelöst werden können. Dabei können beide Bewegungsrichtungen auch gleichzeitig auftreten.

Es ist nun an sich möglich, das Schaltstück unmittelbar mit dem Betätigungselement zu verbinden, beispielsweise durch Angießen, Einrasten, Anschrauben oder ähnliches. In diesem Fall folgt allerdings das Schaltstück der Drehbewegung, was in vielen Fällen nicht gewünscht ist, in denen man unabhängig von der Drehlage des Betätigungselements bei dessen Längsverschiebung man den gleichen Schalter auslösen möchte. In diesem Falle empfiehlt sich in Weiterbildung der Erfindung die Merkmalskombination nach Anspruch 7. Die Handhabe kann beispielsweise dann zwar gegenüber dem Betätigungselement, nicht aber gegenüber dem Träger verdreht werden, sie bleibt also unabhängig von der Drehlage des Betätigungselements hinsichtlich des Trägers in der gleichen Stellung und damit dem betreffenden Microschalter zugeordnet. Der genannte Ring kann dann beispielsweise eine umlaufende Kante besitzen, die den Betätigungsring und damit dessen Schaltstück mitnimmt.

Wie weiter oben schon erläutert, ist die Erfindung hervorragend geeignet, mehrere Microschalter nebeneinander und quer zur Längsrichtung des Trägers in die erste Aufnahmebucht zu packen. Vielfach kann es sich aber auch empfehlen, die Microschalter mit deren Längsrichtung in Längsrichtung des Trägers auszurichten. Auch hier können mehrere Schalter nebeneinander auf dem Träger, beispielsweise in einer zweiten Aufnahmebucht angeordnet werden, so daß mehrere Microschalter im Bezug auf die Längsrichtung des Trägers auf gleicher Höhe sich befinden. Die zuletzt genannte Merkmalskombination ist insbesondere dann geeignet, wenn der Schalter neben der Betätigungselement und dem zusätzlichen Schaltstück durch einen gesonderten Ansatz getrennt manuell betätigbar sein soll. Dieser Ansatz kann beispielsweise unabhängig von dem Schaltstück und dieses wiederum unabhängig von der Schaltkulisse arbeiten (Anspruch 8, 9).

In diesem Zusammenhang empfiehlt sich die Merkmalskombination nach Anspruch 10, gemäß der eine gesondert betätigbare Handhabe in Form eines Betätigungsknopfes vorgesehen ist, der konzentrisch zur Lage des Betätigungselements in dem Träger oder aber auch in dem Betätigungselement selbst in deren Längsrichtung verschiebbar angeordnet ist. Durch Längsverschiebung des Knopfes greift dann der Ansatz an dem Betätigungsstift des zugeordneten Microschalters an, so daß dieser unabhängig von der Bedienung des Betätigungselements geschaltet werden kann. Der Knopf kann beispielsweise zum Betätigen einer Kraftfahrzeughupe verwendet werden, die unabhängig von der Einschaltung anderer Betriebsmittel, wie Waschanlage, Wischer oder Beleuchtung, jederzeit betätigbar sein sollen. Entsprechendes kann für die Bedienung des Warnlichts o.ä. gelten.

Da mittels des Betätigungselements eine Vielzahl von Schaltstellungen und insbesondere auch Drehstellungen eingestellt und zur Betätigung eines zugeordneten Schalters ausgenutzt werden kann, empfiehlt sich in Weiterbildung der Erfindung in einzelnen Schaltstellungen des Betätigungselements definierte Raststellungen zuzuordnen, in denen das Betätigungselement verbleibt, bis eine neue Schaltstellung gewählt wird. Hierzu dient in Weiterbildung der Erfindung die Merkmalskombination nach Anspruch 11. Soweit für das Betätigungselement keine unterschiedlichen Stellungen in seiner Längsrichtung vorgesehen sind, bei der eine geeignete Kontur das Betätigungselement selbst unter Vorspannung rastend an einer Gegenkontur am Träger angreifen kann, empfiehlt sich die Wahl eines Rastrings, welcher gegenüber dem Träger undrehbar, aber längsverschieblich angeordnet, in eine zugeordnete Rastkurve des Betätigungselementes eingreift. Dabei ist der Rastring in Rastrichtung federnd vorgespannt, wobei sich die Feder an dem Träger selbst oder an einem gegenüber dem Träger festen Punkt mit ihrem anderen Ende abstützt. Es ist aber auch umgekehrt möglich, den Rastring undrehbar, aber axial längs verschieblich vorgespannt, in dem Betätigungselement zu führen und auf eine entsprechende Rastkontur des Trägers wirken zu lassen. In beiden Stellungen wird das Betätigungselement beim Verdrehen in lagestabile Raststellungen geführt, mit der sie nur unter Kraftaufwand beim Drehen herausgebracht werden kann, worauf hin sie dann in der nächsten Drehstellung einrastet. Beim Verdrehen wird somit der Rastring entgegen der vorspannenden Feder aus der eingerasteten Lage herausgedrückt, wobei er wieder nach vorn springt, sobald die nächste Rastlage des Betätigungselements erreicht ist.

Bei der Betätigung des Betätigungsselements, insbesondere hinsichtlich seiner Drehbewegung läßt sich die Handhabung dadurch vereinfachen, daß für das Betätigungselement nur ein gewisser Drehbereich möglich ist. Hierdurch läßt sich das Schaltverhalten beschleunigen und alle Schalterstellungen lassen sich ohne Nachgreifen einstellen. Andererseits läßt sich von der Bedienungsperson die Lage der einzelnen Schaltstellungen auch einfacher merken. Um dies zu erreichen, empfiehlt sich in Weiterbildung der Erfindung die Merkmalskombination nach Anspruch 13. Praktisch wird man dabei so vorgehen, daß eine federnde Rastnase des Betätigungselementes in eine geeignete Ausnehmung des Trägers eingreift. Durch die Kontur der Ausnehmung wird die Bewegung der Rastnase und damit des Betätigungselementes gegenüber dem Träger begrenzt. Das gilt sowohl für die Längsbewegung des Betätigungselementes gegenüber dem Träger, als auch gegenüber dessen Drehbewegung. Zweckmäßigerweise wird die als Ausnehmung ausgestaltete Führungsöffnung eine im wesentlichen viereckige Form haben, beispielsweise indem aus einer zylinderförmigen Oberfläche des Trägers ein viereckiger Sektor ausgeschnitten ist. Umgekehrt ist es aber denkbar, daß ein als Anschlag dienender Vorsprung in eine entsprechende Ausnehmung des Betätigungselementes ragt. Es muß sich bei der begrenzten Kontur auch nicht unbedingt um den Rand einer Öffnung handeln. Es können auch durch umlaufende Kanten begrenzte Räume vorgesehen sein, die den Weg eines in den umschlossenen Raum eintauchenden Anschlags begrenzen.

Der erfindungsgemäße Schalter ist hervorragend geeignet als Lenkstockschalter entsprechend den Merkmalen nach Anspruch 14 bei einem Kraftfahrzeug eingesetzt zu werden. Hierbei wird das Betätigungselement im wesentlichen ringförmig sein, so daß eine weitgehende Freiheit für die Bedienungsperson besteht, wie sie manuell an dem Betätigungsselement angreift. Um auch nach einer Vormontage des Schalters, insbesondere bei einem Zusammenbau des Trägers mit dem Betätigungselement den Schalter noch umrüsten zu können, empfiehlt sich in Weiterbildung der Erfindung die Merkmalskombination nach Anspruch 15. Da hier aber Schalter und Schaltkulisse nach dem Zusammenbau frei zugänglich sind, empfiehlt sich in Weiterbildung der Erfindung die Merkmalskombination nach Anspruch 16. Dabei wird der Halter gleichzeitig als Aufnahmehülse für einen Bereich des Betätigungselementes fungieren, in dem wieder der Träger gehalten ist. Der Träger kann zudem in Weiterbildung der Erfindung mit dem hülsenförmigen Halter verrastet sein. Gleichzeitig kann die innere Mantelfläche des Halters ein Widerlager für die oberhalb der Schaltstößel der Microschalter angeordnete Schaltkulisse bilden, so daß diese in Schaltrichtung der Stößel nicht ausweichen kann.

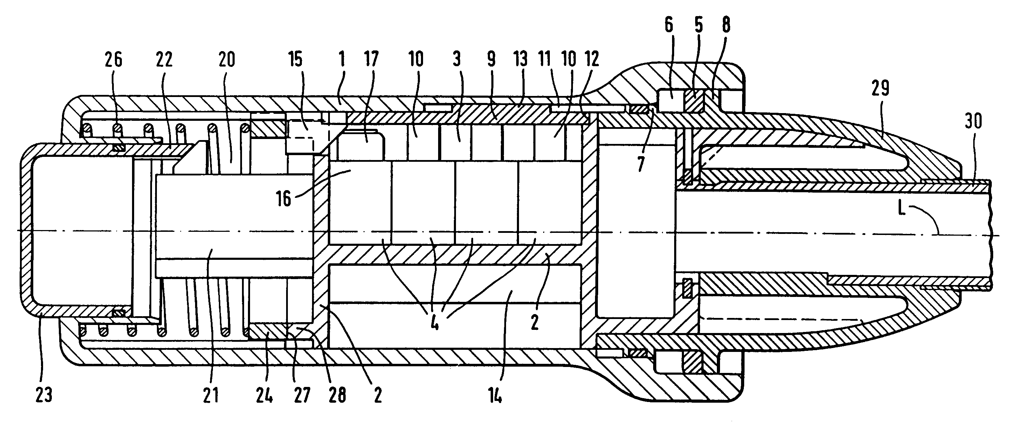

Ein Ausführungsbeispiel der Erfindung wird nachfolgend anhand der Zeichnung erläutert.

In der Zeichnung ist als Betätigungsselement 1 eine Griffhülse zu erkennen, die einen Träger 2 umschließt. Der Träger besitzt eine erste Aufnahmebucht 3, in der mehrere als Microschalter 4 ausgestaltete Schaltmodule in entsprechend vorbereitete Plätze der Aufnahmebucht 3 eingerastet sind. Dabei sind die Microschalter 4 zueinander parallel und in ihrer Längsrichtung quer zur Längsrichtung des Trägers 2 stehend in der Aufnahmebucht angeordnet. Für die Erfindung besonders wichtig ist nun, daß die Griffhülse 1 gegenüber dem Träger 2 sowohl in Richtung der Längsachse L des Trägers verschiebbar, als auch um die Längsachse L drehbar angeordnet ist. Um die Drehbewegung zu begrenzen, dient ein mit der Griffhülse verbundener Anschlag 5, der in eine geeignete Führungsöffnung 6 am Träger 2 eingreift. Bei dem vorliegenden Beispiel ist die Führungsöffnung durch umlaufende Wände 7,8 gebildet. Die Bewegung des Anschlages kann aber auch durch die umlaufende Kante einer Ausnehmung in dem Träger gebildet sein oder die bewegungsbegrenzende Kante ist der Rand eines Durchbruchs in einer Trägerwand.

Ein anderes wichtiges Merkmal für die Erfindung ist die Anwendung einer Schaltkulisse 9, die auf die Stößel 10 der Microschalter 4 einwirkt. Die Schaltkulisse ist im wesentlichen ein viereckiger Ausschnitt aus der Mantelfläche eines Hohlzylinders, der an seine den Betätigungsstößeln 10 zugewandten Fläche geeignete Vorsprünge besitzt. Die Schaltkulisse 9 ist mit der Griffhülse 1 in geeigneter Weise lösbar verbunden, so daß sie zumindest die Drehbewegung des Betätigungselements 1 mitmacht. Beim vorliegenden Ausführungsbeispiel ist allerdings die Schaltkulisse 9 mittels eines in eine Nut 11 in dem Betätigungselement 1 ragenden Vorsprungs 13 längsverschiebbar geführt und stützt sich in Längsrichtung der Griffhülse gleichzeitig an einer umlaufenden Ausnehmung 12 am Träger 2 in der Längsrichtung des Trägers ab. Hierdurch ist die Griffhülse 1 gegenüber der Schaltkulisse 9 längsverschiebbar und nimmt die Schaltkulisse 9 bei einer Drehbewegung aber mit. Bei einer entsprechenden Ausgestaltung der Kulisse ist es aber auch möglich, diese sowohl in Längsrichtung, als auch in Drehrichtung mitzunehmen. Sie kann im Rahmen der Erfindung auch an die Griffhülse angegossen sein, ist aber mit Vorteil auswechselbar, um den Schalter für verschiedene Einsatzzwecke geeignet zu machen und anpassen zu können. Entsprechendes gilt für die Microschalter 4, bei denen unterschiedliche Schalter und auch noch nur einige Schalter in die entsprechenden Steckplätze der Aufnahmebucht 3 eingesetzt sein können. Es kann auch unterhalb der Aufnahmebucht 3 eine zusätzliche Bucht 14 zur Aufnahme von Microschaltern vorgesehen werden, die mit einer entsprechenden Schaltkulisse betätigt werden.

Bei dem erfindungsgemäßen Schalter lassen sich die in der Aufnahmebucht 3 befindlichen Microschalter 4 aber nicht nur durch die Schaltkulisse 9, sondern auch mittels eines von der Griffhülse 1 in deren Innenraum ragendes Schaltstück 15 betätigen. Es ist also möglich, den Microschalter 16 der in der Bucht 3 befindlichen Microschalter 4 dadurch zu betätigen, daß durch Längsbewegung der Griffhülse 1 nach rechts das Schaltstück 15 an dem Stößel 17 angreift und ihn nach unten drückt und damit den Microschalter 16 betätigt. Im Bedarfsfalle lassen sich auch die Wirkungen der Schaltkulisse 9 und des Schaltstücks 15 hinsichtlich des Microschalters 16 kombinieren. Wie weiter oben schon erläutert, ist durch die Längsbewegung der Griffhülse die Lage der Schaltkulisse 9 nicht betroffen.

In der Zeichnung ist weiterhin eine zweite Aufnahmebucht 20 zu erkennen, in der mindestens ein Microschalter 21 koaxial zur Längsachse L angeordnet ist. Dabei können auch mehrere Microschalter 21 in dieser Lage nebeneinander in entsprechende Steckplätze der Bucht 20 eingesetzt sein. Der Microschalter 21 oder auch mehrere dieser Schalter, ggf. unterschiedlichen Schaltertyps, werden von einem Schaltansatz 22 betätigt, der von der Seitenwand eines topfförmigen Schaltknopfs absteht. Der Schaltknopf 23 stützt sich mittels einer nicht gezeigten Feder am Träger 2 oder aber auch an der Griffhülse 1 ab, so daß er gegen einen in der Zeichnung nicht dargestellten Anschlag in seiner aus der Zeichnung ersichtlichen Ausgangslage gehalten wird. Durch Eindrücken des Schaltknopfes 23 wird dann der Microschalter 21 betätigt.

Für die Erfindung weiterhin wichtig ist die Verwendung eines Rastrings 24, welcher sich über eine Spiralfeder 26 an einer Rastkontur 27 abstützt, die in einen Ringvorsprung 28 des Trägers 2 eingearbeitet ist. Der gegenüber der Griffhülse längsverschiebbare aber drehgesicherte Rastring ist mit nicht im einzelnen dargestellten, in Richtung Ringvorsprung 28 weisenden Rastvorsprüngen versehen, die auf dem Umfang des Rastrings verteilt sind und die in entsprechende Ausnehmungen des Rastvorsprungs 28 eingreifen. Damit erhält die Griffhülse mehrere vorbestimmte Drehlagen, in denen der Rastring in den Rastvorsprung 28 einrastet und die Griffhülse 1 solang in dieser Lage hält, bis sie durch Kraftaufwendung in die nächste stabile Drehstellung gedreht wird.

Der Träger kann aus Montagegründen sich aus mehreren Teilen zusammensetzen. So ist beispielsweise an dem Träger noch eine Trägerhülse 29 befestigt, die als Teil des Trägers auch die Führungsöffnung 6 besitzt. Der Träger kann auf einen Halter 30 aufgerastet sein, welcher eine Verbindung zum Armaturenbrett eines Kraftfahrzeugs schaffen kann. Es ist aber auch denkbar, daß der Halter 30 sowohl den Träger, als auch Teile der Griffhülse umgreift und der Träger mit der Innenfläche des Halters 30 verrastet ist. Aus der Zeichnung ist ersichtlich, daß die Spiralfeder 26 gleichzeitig auch in der Lage ist, die Griffhülse 1 in ihrer Auslage gegenüber dem Träger 2 zurückzuschieben und somit eine doppelte Aufgabe erfüllt. Für die Montage des erfindungsgemäßen Schalters dienende Einzelheiten, wie die Befestigung des Trägers an der Hülse, zweckmäßige Dichtungen, Vorschriften über den Zusammenbau des Schalters usw. sollen hier an dieser Stelle nicht im einzelnen erläutert werden und stehen dem Durchschnittsfachmann im Bedarfsfalle zur Verfügung. Soweit der Halter 30 auf die Griffhülse 1 übergreift, kann in der Griffhülse ein Durchbruch vorgesehen sein, in welchen von außen die Schaltkulisse einsetzbar ist. Die Schaltkulisse stützt sich dann radial nach außen an der Innenwand des Halters ab. Der Wechsel der Microschalter und der Wechsel der Kulisse können dann auch bei zusammengebauter Träger-Griffhülseneinheit vorgenommen werden, solang diese Einheit noch nicht in den Halter eingesteckt bzw. noch aus diesem ausgebaut ist. Es liegt auch im Rahmen der Erfindung, wenn der Rastring drehfest und längsverschiebbar auf dem Träger 2 angebracht ist und sich gegen eine entsprechende Rastkontur an der Griffhülse 1 abstützt. Die Feder 26 kann sich wiederum statt an der Griffhülse 1 dann an dem Halter abstützen. Auch das Schaltstück 15 kann derart angeordnet sein, daß es zwar die Längsbewegung der Griffhülse mitmacht, nicht aber deren Drehbewegung. Somit könnte das Schaltstück 15 drehfest, aber längsverschiebbar im Träger angeordnet sein, während der Träger das Schaltstück bei seiner Längsbewegung mitnimmt. Das Schaltstück stellt dann einen Teil eines Schaltrings dar, welcher durch einen Ansatz in der Griffhülse mitgenommen wird. Im vorliegenden Falle hat das Schaltstück 15 schon seine Schaltstellung gegenüber dem Stößel 17 erreicht.

## Patentansprüche

1. Elektrischer Schalter mit einem Kontaktstücke tragenden Träger (2), bei dem mittels der Kontaktstücke durch Bewegung eines auf dem Träger (2) geführten und diesen zumindest teilweise umschließenden Betätigungselements (1) in mindestens einer ersten Bewegungsrichtung (L) elektrische Kontakte geschlossen werden, dadurch **gekennzeichnet**, daß der Träger (2) wenigstens eine erste Aufnahmebucht (3) aufweist, in die zumindest ein, die Kontaktstücke tragender Microschalter (4) derart einsetzbar ist, daß er nach Montage eines ersten Betätigungselements (1) durch dessen Bewegung auslösbar ist.

2. Schalter nach Anspruch 1, dadurch **gekennzeichnet**, daß das erste Betätigungselement eine Aufnahme (11) für eine Schaltkulisse (9) aufweist, die lösbar mit dem ersten Betätigungselement (1) verbunden ist und zur von der Bewegung des Betätigungselements abhängigen Betätigung der Microschalter (4) dient.

3. Schalter nach Anspruch 2, dadurch **gekennzeichnet**, daß die Schaltkulisse (9) im wesentlichen einen Ausschnitt aus der Mantelfläche des im wesentlichen hohlzylinderförmigen ersten Betätigungselements (1) bildet.

4. Schalter nach einem der vorangegangenen Ansprüche, dadurch **gekennzeichnet**, daß das erste Betätigungselement (1) gegenüber dem Träger (2) um dessen Längsachse (L) verdrehbar und/oder in Richtung von dessen Längsachse(L) verschiebbar ist.

5. Schalter nach einem der vorangegangenen Ansprüche, dadurch **gekennzeichnet**, daß in Richtung der Längsachse (L) des Trägers (2) mehrere Microschalter (4) nebeneinander angeordnet sind.

6. Schalter nach einem der vorangegangenen Ansprüche, dadurch **gekennzeichnet**, daß ein gesondertes, mit dem Betätigungselement (1) verbundenes Schaltstück (15)-vorgesehen ist, welches mindestens einen Microschalter (16) in Abhängigkeit von der Längsbewegung des Betätigungselements (1) betätigt.

7. Schalter nach einem der vorangegangenen Ansprüche, dadurch **gekennzeichnet**, daß eine gegenüber dem Träger längsverschiebbar, aber unverdrehbar gelagerte Handhabe (22) mit einem in den Innenraum des Betätigungselements (BE) ragenden Schaltansatz (22) in Abhängigkeit von der Längsverschiebung der Handhabe (22) in Richtung der Längsachse (L) des Trägers (2) einen Microschalter (21) betätigt.

8. Schalter nach einem der vorangegangenen Ansprüche, dadurch **gekennzeichnet**, daß in die erste Aufnahmebucht (3) mehrere Microschalter (4) nebeneinander und quer zur Längsrichtung (L) des Trägers (2) in vorbereitete Plätze eingerastet sind und daß vorzugsweise eine zweite Aufnahmebucht (20) vorgesehen ist, in der mindestens ein Microschalter in Längsrichtung (L) des Trägers (2)einsetzbar ist.

9. Schalter nach den Ansprüchen 7 und 8, dadurch **gekennzeichnet**, daß der in der zweiten Aufnahmebucht (20) befindliche Microschalter (21) durch den Schaltansatz (22) und/oder ein weiterer Microschalter (16) davon unabhängig durch das Schaltstück (15) betätigbar ist.

10. Schalter nach einem der vorangegangenen Ansprüche, dadurch **gekennzeichnet**, daß zur Festlegung von Drehstellungen des Betätigungselements (1) gegenüber dem Träger (2), des Betätigungselements axial vorgespannt mit einer Rastkontur (24) in eine entsprechende um dem Träger (2) verbundene Gegenkontur (27) eingreift.

11. Schalter nach Anspruch 7, dadurch **gekennzeichnet**, daß die Handhabe (23) ein am Ende des Trägers (2) gelagerter konzentrisch zur Betätigungselement (1) angeordneter Betätigungsknopf ist.

12. Schalter nach Anspruch 6, dadurch **gekennzeichnet**, daß das Schaltstück (15) an einem im Träger (2) längsverschiebbar, gegenüber dem Betätigungselement (1) drehbar und durch dessen axiale Bewegungsrichtung mitnehmbar angeordneter Mitnahmering ist.

13. Schalter nach einem der vorangegangenen Ansprüche, dadurch **gekennzeichnet**, daß das Betätigungselement mit einem vorzugsweise federnd angeordneten Anschlag (5) in eine Führungsöffnung (6) im Träger (2) eingreift, so daß zum einen das Betätigungselement unverlierbar gegenüber dem Träger gehalten und zum anderen die Kontur der Führungsöffnung zur Begrenzung der Relativbewegung des Betätigungselements (1) gegenüber dem Träger (2) sowohl hinsichtlich der Drehbewegung als auch der Längsbewegung dient.

14. Schalter nach einem der vorangegangenen Ansprüche, dadurch **gekennzeichnet**, daß er am Lenkstock eines Kraftfahrzeugs befestigbar ist und die Betätigungselement ein im wesentlichen ringförmiger Handgriff ist.

15. Schalter nach einem der vorangegangenen Ansprüche, dadurch **gekennzeichnet**, daß die Microschalter (4) und/oder die Schaltkulisse (9) in den Träger (2) bzw. des Betätigungselements (1) einsetzbar sind, nachdem das Betätigungselement(1) auf den Träger (2) montiert wurde.

16. Schalter nach einem der vorangegangenen Ansprüche, dadurch **gekennzeichnet**, daß der mit dem Betätigungselement (1) verbundene Träger (2) in einen mit dem Lenkstock oder dem Armaturenbrett eines Fahrzeugs verbindbaren Halter (30) einrastbar ist.

## Claims

1. An electrical switch with a carrier unit (2) supporting contact parts, in which electrical contacts are, in at least one first direction of movement (L), closed by means of the contact parts, through the movement of an activating element (1) guided on the carrier unit (2) and at least partially surrounding the same, characterized in that, the carrier unit (2) has at least one first mounting cavity (3) into which at least one microswitch (4) supporting the contact parts can be inserted in such a manner that it can be triggered, after the mounting of a first activating element (1), through the movement of the same.

2. A switch in accordance with claim 1, characterized in that, the first activating element has a mounting (11) for a gear shifting gate (9), which is detachably connected with the first activating element (1) and serves for the activation of the microswitch (4) in a manner which is dependent upon the movement of the activating element.

3. A switch in accordance with claim 2, characterized in that, the gear shifting gate (9) essentially forms a section cut out from the casing surface of the first activating element (1), which is essentially shaped as a hollow cylinder.

4. A switch in accordance with one of the preceding claims, characterized in that, the first activating element (1) can rotate relative to the carrier unit (2) around the longitudinal axis (L) of the same and/or in a displaceable manner in the direction of the longitudinal axis (L) of the same.

5. A switch in accordance with one of the preceding claims, characterized int hat, several microswitches (4) are positioned next to one another in the direction of the longitudinal axis (L) of the carrier unit (2).

6. A switch in accordance with one of the preceding claims, characterized in that, a separate contact part (15) connected with the activating element (1), which activates at least one microswitch (16) in dependence on the longitudinal movement of the activating element (1), is provided.

7. A switch in accordance with one of the preceding claims, characterized in that, a handle unit (22), which is longitudinally displaceable relative to the carrier unit but is supported in a non-rotatable manner with a switching stud (22) projecting into the internal space of the activating element (BE), in dependence on the longitudinal displacement of the handle unit (22) in the direction of the longitudinal axis (L) of the carrier unit, activates a microswitch (21).

8. A switch in accordance with one of the preceding claims, characterized in that, several microswitches (4) are, within the first mounting cavity (3), locked into prepared places next to one another and transversely to the longitudinal direction (L) of the carrier unit (2), and that, a second mounting cavity (20), into which at least one microswitch can be inserted in the longitudinal direction (L) of the carrier unit (2), is preferably provided.

9. A switch in accordance with claims 7 and 8, characterized in that, the microswitch (21) which is located in the second mounting cavity (20) can be activated by means of the switching stud (22) and/or an additional microswitch (16) independent thereof, by means of the contact part (15).

10. A switch in accordance with one of the preceding claims, characterized in that, for the fixing of the rotary positions of the activating element (1) relative to the carrier unit (2), the activating element engages, in a manner axially prestressed with a locking contour (24), into a corresponding counter-contour (27) which is connected with the carrier unit (2).

11. A switch in accordance with claim 7, characterized in that, the handle unit (23) is an activating knob which is supported on the end of the carrier unit (2) and is positioned concentrically to the activating element (1).

12. A switch in accordance with claim 6, characterized in that, the contact part (15) is a locking ring which is longitudinally displaceable in the carrier unit (2) and rotatable relative to the activating element (1), and can be carried along through the axial direction of movement of the said element.

13. A switch in accordance with one of the preceding claims, characterized in that, the activating element engages, with a catch unit (5) which is preferably positioned in a spring mounted manner, in a guide aperture (6) in the support unit (2) so that, on the one hand, the activating element is held in a non-detachable manner relative to the carrier unit and, on the other hand, the contour of the guide opening serves for the limiting of the relative movement of the activating element (1) relative to the carrier unit (2), both in regard to the rotary movement, as well as the longitudinal movement.

14. A switch in accordance with one of the preceding claims, characterized in that, it can be attached to the steering column of a motor vehicle, and the activating element is an essentially ring-shaped grip handle.

15. A switch in accordance with one of the preceding claims, characterized in that, the microswitches (4) and/or the gear shifting gate (9) can be inserted into the carrier unit (2) or the activating element (1) after the activating element (1) has been mounted on the carrier unit (2).

16. A switch in accordance with one of the preceding claims, characterized in that, the carrier unit (2) which is connected with the activating element (1) can be locked into a support unit (30) which can be connected with the steering column or the instrument board of a motor vehicle.

## Revendications

1. Commutateur électrique muni d'un support (2) portant des pièces de contact, dans lequel au moyen des pièces de contact, par déplacement d'un organe d'actionnement (1) guidé sur le support (2) et entourant au moins partiellement celui-ci dans au moins une première direction de déplacement (L), des contacts sont fermés, **caractérisé** en ce que le support (2) comporte au moins un premier logement (3) dans lequel au moins un microrupteur (4) portant les pièces de contact peut être inséré de sorte qu'après montage d'un premier organe d'actionnement (1) il puisse être libéré par le déplacement de celui-ci.

2. Commutateur électrique selon la revendication 1, **caractérisé** en ce que le premier organe d'actionnement comporte un dispositif de réception (11) pour un coulisseau de commutation (9) qui est relié de façon amovible au premier organe d'actionnement (1) et sert à actionner les microrupteurs (4) en fonction du déplacement de l'organe d'actionnement.

3. Commutateur selon la revendication 2, **caractérisé** en ce que le coulisseau de commutation (9) constitue pour l'essentiel un secteur de la surface d'enveloppe du premier organe d'actionnement (1) sensiblement en forme de cylindre creux.

4. Commutateur selon l'une des revendications précédentes, **caractérisé** en ce que le premier organe d'actionnement (1) peut être soumis à un mouvement de rotation par rapport au support (2) autour de l'axe longitudinal (L) de celui-ci et/ou peut être déplacé dans la direction de l'axe longitudinal (L) de celui-ci.

5. Commutateur selon l'une des revendications précédentes, **caractérisé** en ce que plusieurs microrupteurs (4) sont disposés les uns à côté des autres dans la direction de l'axe longitudinal (L) du support (2).

6. Commutateur selon l'une des revendications précédentes, **caractérisé** en ce qu'une pièce de commutation séparée (15) reliée à l'organe d'actionnement (1) est prévue, qui actionne au moins un microrupteur (16) en fonction du déplacement longitudinal de l'organe d'actionnement (1).

7. Commutateur selon l'une des revendications précédentes, **caractérisé** en ce qu'une manette montée de façon déplaçable longitudinalement par rapport au support, mais de façon à ne pas pouvoir être soumise à un mouvement de rotation, munie d'un épaulement de commutation (22) en saillie à l'intérieur de l'organe d'actionnement (BE) actionne un microrupteur (21) en fonction du déplacement longitudinal de la manette dans la direction de l'axe longitudinal (L) du support (2).

8. Commutateur selon l'une des revendications précédentes, **caractérisé** en ce que plusieurs microrupteurs (4) sont encliquetés dans le premier logement de réception (3) les uns à côté des autres et transversalement à la direction longitudinale (L) du support (2) à des endroits préparés, et en ce que de préférence un second logement de réception (20) est prévu, dans lequel au moins un microrupteur peut être inséré dans le sens longitudinal (L) du support (2).

9. Commutateur selon les revendications 7 et 8, **caractérisé** en ce que le microrupteur (21) situé dans le second logement de réception (20) peut être actionné par l'épaulement de commutation (22) et/ou un microrupteur supplémentaire (16) peut être actionné indépendamment du premier microrupteur par la pièce de commutation (15).

10. Commutateur selon l'une des revendications précédentes, **caractérisé** en ce que pour la détermination des positions de rotation de l'organe d'actionnement (1) par rapport au support (2), l'organe d'actionnement sollicité axialement coopère à l'aide d'un contour d'enclenchement (24) avec un contour opposé correspondant relié autour du support (2).

11. Commutateur selon la revendication 7, **caractérisé** en ce que la manette (23) est un bouton de manoeuvre monté à l'extrémité du support (2) et disposé de manière concentrique avec l'organe d'actionnement (1).

12. Commutateur selon la revendication 6, **caractérisé** en ce que la pièce de commutation (15) est un anneau d'entraînement agencé de manière déplaçable longitudinalement dans le support (2), de manière rotative par rapport à l'organe d'actionnement (1) et de façon à pouvoir être entraîné dans la direction de déplacement axial de celui-ci.

13. Commutateur selon l'une des revendications précédentes, **caractérisé** en ce que l'organe d'actionnement coopère à l'aide d'une butée (5) agencée de préférence de manière élastique avec une ouverture de guidage (6) formée dans le support (2), de sorte que d'une part, l'organe d'actionnement est retenu de façon imperdable par rapport au support et d'autre part, le contour de l'ouverture de guidage sert à limiter le mouvement relatif de l'organe d'actionnement (1) par rapport au support (2) aussi bien eu égard au mouvement de rotation qu'au mouvement longitudinal.

14. Commmutateur selon l'une des revendications précédentes, caractérisé en ce qu'il peut être fixé à la colonne de direction d'un véhicule à moteur et en ce que l'organe d'actionnement est une manette sensiblement annulaire.

15. Commutateur selon l'une des revendications précédentes, **caractérisé** en ce que les microrupteurs (4) et/ou le coulisseau de commutation (9) peuvent être insérés dans le support (2) respectivement de l'organe d'actionnement (1) après que l'organe d'actionnement (1) a été monté sur le support (2).

16. Commutateur selon l'une des revendications précédentes, **caractérisé** en ce que le support (2) relié à l'organe d'actionnement (1) peut être enclenché dans un support (30) pouvant être relié à la colonne de direction ou au tableau de bord d'un véhicule.
